# EUROPÄISCHE PATENTSCHRIFT

(11) **EP 2 539 613 B1**
(45) Veröffentlichungstag und Bekanntmachung des Hinweises auf die Patenterteilung: **19.03.2014**
(21) Anmeldenummer: 11706480.8
(22) Anmeldetag: 24.02.2011
(51) Int. Cl.: F16K 11/085

(54) **PULSVENTIL**
PULSING VALVE
SOUPAPE À IMPULSION

(30) Priorität: 27.02.2010 DE 102010009617
(43) Veröffentlichungstag der Anmeldung: 02.01.2013
(73) Patentinhaber: ALLMINERAL AUFBEREITUNGSTECHNIK GMBH & CO. KG, 47198 Duisburg (DE)
(72) Erfinder: LINNHOFF, Hans-Josef, 45721 Haltern am See (DE)
(74) Vertreter: Müller, Karl-Ernst
(86) Internationale Anmeldenummer: PCT/EP2011/000892
(87) Internationale Veröffentlichungsnummer: WO 2011/104019

(56) Entgegenhaltungen:
- DE-A1-102008 006 022
- GB-A- 899 286
- US-A- 3 911 953
- US-A- 4 312 381
- US-A- 4 747 942

## Beschreibung

Die Erfindung betrifft ein Pulsventil zur Erzeugung eines großvolumigen pulsierenden Fluidstroms aus einem dem Pulsventils von einer Druckerzeugungsanlage zugeführten Fluid, wobei in dem Gehäuse des Pulsventils wenigstens ein durch einander gegenüberliegende Fensterausschnitte in der Gehäusewand gebildeter Kanal vorgesehen ist und im Inneren des Gehäuses eine drehbare Rotorwelle mit einer darauf angeordneten Rotorflügelanordnung angeordnet ist, die bei Drehung der Rotorwelle im Zusammenwirken mit den Begrenzungskanten der Fensterausschnitte den auf das Pulsventil treffenden Fluidstrom periodisch zum Durchtritt durch das Gehäuse freigibt oder unterbricht.

Ein Pulsventil mit den vorgenannten Merkmalen ist aus der US 4.747.942 A bekannt. Der in dieser Druckschrift beschriebene Pulsgeber für die Steuerung einer luftgepulsten Setzmaschine vereinigt in einem Gehäuse sowohl einen Kanal für die von einer Druckerzeugungsanlage in die Luftkammer der Setzmaschine strömende Luft als auch einen Kanal für die von der Luftkammer der Setzmaschine in die Außenluft abströmende Luft. Die Kanäle sind jeweils durch zwei einander gegenüberliegende Fensterausschnitte gebildet, mit deren Begrenzungskanten jeweils eine auf einer gemeinsamen Rotorwelle angeordnete Rotorflügelanordnung zusammenwirkt. Somit erzeugt, die Rotorflügelanordnung jeweils einen pulsierenden Luftstrom in die Luftkammer der Setzmaschine hinein und aus der Luftkammer heraus. Soweit hierzu die generelle Anforderung besteht, einem pulsierenden Fluidstrom aus zumindest einem stetigen Teilstrom und einem gepulsten Teilstrom zusammenzusetzen, lässt sich dies mit dem in der US 4.747.942 A beschriebenen Pulsgeber nicht realisieren.

Weiterhin ist aus der DE 628 060 A ein in eine Druckluftzufuhrleitung eingesetztes Pulsventil bekannt, welches den Querschnitt der Leitung nicht ausfüllt, sondern beiderseits einen wesentlichen Teil der Leitung freilässt. selbst wenn sich das Pulsventil in einer Sperrlage für den die Zufuhrleitung durchströmenden Fluidstrom befindet. Dadurch werden ein stetiger Teilstrom und ein durch das Pulsventil erzeugter pulsender Teilstrom überlagert und somit ein pulsierender Fluidstrom erzeugt.

Durch Benutzung ist es bei derartigen Anwendungen ferner bekannt, den pulsenden Teilstrom weiter aufzuteilen in einen Grundpulsanteil und in einen Additivpulsanteil, wobei sich derartige Pulssteuerungen nur mit mehreren Einzelventilen und aufwendigen Rohrleitungssystemen realisieren lassen.

Der Erfindung liegt daher die Aufgabe zugrunde, ein Pulsventil zur Verfügung zu stellen, welches bei einem einheitlichen und einfachen Aufbau einen aus mehreren Teilströmen zusammensetzbaren pulsierenden Fluidstrom erzeugt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken ein Pulsventil vor, bei welchem in dem Gehäuse des Pulsventils drei Kanäle durch jeweils paarweise einander gegenüberliegende Fensterausschnitte gebildet sind, von denen ein erster Kanal zur Durchleitung eines gleichbleibenden stationären Teilstromes, ein zweiter Kanal zur Erzeugung eines einen Grundpulsanteil bildenden zweiten Teilstromes und ein dritter Kanal zur Erzeugung eines einen Additivpulsteil bildenden dritten Teilstromes des vom Pulsventil erzeugten pulsierenden Fluidstromes eingerichtet ist, wobei auf der Rotorwelle zwei jeweils dem zweiten Kanal und dem dritten Kanal zugeordnete Rotorflügelanordnungen angeordnet sind.

Mit der Erfindung ist der Vorteil verbunden, dass mittels eines ein einheitliches Gehäuse aufweisenden Pulsventils ein aus drei Teilströmen, einem stationären Teilstrom, einem Grundpulsteilstrom und einem Additivpulsteilstrom bestehender pulsierender Fluidstrom zur Verfügung gestellt werden kann.

Das erfindungsgemäße Pulsventil ist dabei nicht nur auf dem eingangs genannten technischen Gebiet der Luftsetzmaschinen einsetzbar, sondern kann auf allen technischen Gebieten, bei denen ein pulsierender Fluidstrom benötigt wird, zum Einsatz kommen. Dabei kann das strömende Medium kompressibel sein, dass heißt in Form eines Gases vorliegen, oder auch inkompressibel sein wie eine Flüssigkeit.

Die Erfindung beruht zunächst auf dem Grundprinzip, dass das Pulsventil beispielsweise unter Einsatz eines dieses umgebenden Gehäuses in eine Rohrleitung eingebaut sein und den diese Rohrleitung durchströmenden Fluidstrom in einen pulsierenden Fluidstrom überführen kann. Hierzu sind in das Gehäuse des Pulsventils jeweils paarweise einander gegenüberliegende Fensterausschnitte eingelassen, deren Querschnitt die Größe des jeweils durch den so gebildeten Kanal zu führenden Teilstromes festlegt. Wenn die die Rotorflügelanordnungen tragende Rotorwelle in Drehung versetzt wird, bleibt der Querschnitt des ersten Kanals unverändert und legt so den stationären Anteil des durch das Pulsventil erzeugten pulsierenden Fluidstromes fest. Soweit dem zweiten und dem dritten Kanal jeweils sich mit der Rotorwelle drehende Rotorflügelanordnungen zugeordnet sind, versperren diese Rotorflügelanordnungen zeitweise die zugeordneten Fensterausschnitte; in diesem Zeitraum herrscht nur die stationäre Strömung. Wenn die Außenkante einer Rotorflügelanordnung eine Begrenzungskante eines Fensterausschnitts überstreicht, entsteht ein sich allmählich öffnender Querschnitt, der einen immer größer werdenden Volumenstrom passieren lässt. Der Strömungsquerschnitt nimmt wieder ab, wenn sich die Außenkante der Rotorflügelanordnung der in Drehrichtung gegenüberliegenden Fensterausschnitts-Begrenzungskante nähert. Beim Erreichen dieser Kante schließt sich der betreffende Kanal.

Soweit der Querschnitt der Fensterausschnitte die Größe des durch den zugeordneten Kanal strömenden Teilstromes festlegt, bestimmt die zum gegenüberliegenden Fensterausschnitt des Fensterausschnittspaares gerichtete Erstreckung der Fensterausschnitte die Breite, das heißt die zeitliche Dauer eines durch Öffnen und Schließen der Fensterausschnitte durch die Rotorflügelanordnung festgelegten Pulses. Die rechtwinklig dazu festgelegte Erstreckung des Fensterausschnitts legt den jeweils maximalen Volumenstrom und damit die Amplitude des Pulses fest. Die Form der Fensterausschnitte in der Gehäusewand kann insoweit beliebig ausgebildet sein, um den jeweils erzeugten Puls zu beeinflussen.

Während bei der Verwirklichung der Erfindung zunächst von einer festliegenden Form der Fensterausschnitte ausgegangen ist, kann nach einem Ausführungsbeispiel der Erfindung vorgesehen sein, dass die in der Gehäusewand angeordneten Fensterausschnitte in ihrer zum gegenüberliegenden Fensterausschnitt gerichteten Erstreckung einstellbar eingerichtet sind, so dass bei dem derart ausgebildeten Pulsventil die zeitliche Dauer eines Pulses einstellbar sein kann.

Nach alternativen Ausführungsbeispielen der Erfindung können die paarweise gegenüberliegenden Fensterausschnitte in einer symmetrischen Anordnung oder auch in einer asymmetrischen Anordnung in der Gehäusewand angeordnet sein.

Nach einem weiteren Ausführungsbeispiel der Erfindung kann vorgesehen sein, dass die dem zweiten Kanal und/oder dem dritten Kanal zugeordneten Rotorflügelanordnungen bezüglich der in der Gehäusewand bestehenden Fensterausschnitte verschiebbar und/oder verdrehbar sind. Durch die Verschiebung der Rotorflügelanordnungen in der Längsachse der Rotorwelle kann der wirksame Querschnitt der von der Rotorflügelanordnung überdeckten Fensterausschnitte im Wege einer Breitenverstellung verändert werden, so dass damit die Größe des durch den betreffenden Kanal strömenden Teilstromes und somit die Amplitude des erzeugten Pulses, also des Grundpulses und/oder des Additivpulses, einstellbar ist. Soweit zusätzlich oder alternativ vorgesehen ist, auch die den beiden Kanälen zugeordneten Rotorflügelanordnungen relativ zueinander zu verdrehen, wird damit die Phasenlage des Additivpulses relativ zum Grundpuls verstellt. Resultierend ergibt sich je nach Phasenlage des Additivpulses ein steilerer oder flacherer Anstieg im Verlauf des aufsummierten Querschnittes, dass heißt eine unterschiedliche Schwerpunktlage verbunden mit unterschiedlicher Pulsbreite. Bei zunehmender Verdrehung der Rotorflügelanordnungen gegeneinander erzeugt der Additivkanal allmählich einen eigenen kleinen Puls, der zeitlich den Grundpuls vor- oder nachgelagert sein kann.

Gemäß einer ersten konkreten Ausführungsform der Erfindung ist vorgesehen, dass der erste Kanal und der zweite Kanal durch ein gemeinsames Fensterausschnittspaar gebildet sind und zur Unterteilung des dadurch gebildeten Strömungsweges in den ersten und den zweiten Kanal auf der Rotorwelle eine mit ihrer Fläche in der Strömungsrichtung ausgerichtete Verstellscheibe angeordnet ist, an deren einer Seite die Rotorflügelanordnung angeordnet ist.

In einer Weiterbildung kann dabei vorgesehen sein, dass die Verstellscheibe an der Rotorwelle verschiebbar angeordnet ist und an der Verstellscheibe zum Ausgleich von deren Verstellweg gegenüber den bezüglich der Rotorwelle fixierten Rotorflügeln mit den Rotorflügeln überlappende Verlängerungsflügel angebracht sind, wobei Rotorflügel und Verlängerungsflügel mittels eines Verstellmechanismus gegeneinander verschiebbar sind. Hiermit wird erreicht, dass durch die Verstellung der Verstellscheibe die Querschnittsverhältnisse zwischen erstem Kanal und zweitem Kanal veränderbar beziehungsweise einstellbar sind, so dass das Verhältnis von stationärem Anteil und Grundpulsanteil an dem insgesamt erzeugten pulsierenden Gesamtstrom an unterschiedliche Anforderungen anpassbar ist.

Hinsichtlich der konstruktiven Ausführung ist nach einem Ausführungsbeispiel der Erfindung vorgesehen, dass die Rotorflügel von einer an der Rotorwelle befestigten Haltescheibe getragen sind. Bei Drehung der Rotorwelle werden somit die Rotorflügel mitgenommen, die dann ihrerseits die damit gekoppelten Verlängerungsflügel mit der Verstellscheibe mitnehmen.

Zusätzlich oder alternativ zur Verstellmöglichkeit für die Verstellscheibe kann vorgesehen sein, dass der Querschnitt des ersten Stationärkanals durch Anbringen von Blockscheiben an dem der Verstellscheibe gegenüberliegenden Gehäusedeckel des Gehäuses einstellbar ist. Hierdurch ist der Querschnitt des ersten Kanals ebenfalls zusätzlich veränderbar beziehungsweise einstellbar. In einer alternativen Ausführungsform kann vorgesehen sein, dass der Querschnitt des ersten Stationärkanals durch Anordnung eines verschiebbaren Kolbens an dem der Verstellscheibe gegenüberliegenden Gehäusedeckel des Gehäuses einstellbar ist.

Im Hinblick auf eine weiterhin vorgesehene Einstellung des Additivpulsanteils an dem insgesamt erzeugten pulsierenden Fluidstrom ist nach einem Ausführungsbeispiel der Erfindung vorgesehen, dass dem den dritten Kanal bildenden Fensterausschnittspaar gesonderte Rotorflügelanordnungen zugeordnet sind, die aus an einer bezüglich der Rotorwelle verdrehbar angeordneten Trägerscheibe angebrachten Verlängerungsflügeln und damit überlappend angeordneten, mit einem längs der Rotorwelle verschiebbar und gegenüber der Rotorwelle verdrehbar angeordneten Verstellkolben verbundenen Rotorflügeln bestehen, wobei Verlängerungsflügel und Rotorflügel mittels eines Verstellmechanismus gegeneinander verschiebbar sind. Dabei kann vorgesehen sein, dass die Trägerscheibe mit den daran befestigten Verlängerungsflügeln an der mit der Rotorwelle fest verbundenen Haltescheibe gegenüber dieser um einen Verdrehweg verdrehbar gehaltert ist derart, dass die Verlängerungsflügel bei der Verdrehung der Trägerscheibe relativ zur Haltescheibe die über den Verstellmechanismus mit den Verlängerungsflügeln gekoppelten Rotorflügel mit Verstellkolben mitnehmen.

Insofern wird zunächst einmal für den Additivpuls das gleiche Grundprinzip verwendet wie für den zweiten, den Grundpulsanteil festlegenden Kanal, nämlich dass durch die Verschiebung von Rotorflügeln und Verlängerungsflügeln gegeneinander der wirksame Querschnitt des zugehörigen Fensterausschnittspaares veränderbar beziehungsweise einstellbar ist. Weiterhin sind Trägerscheibe und Verstellkolben mit den jeweils daran angebrachten Rotorflügeln beziehungsweise Verlängerungsflügeln auf der fest mit der Rotorwelle verbundenen Haltescheibe verdrehbar angeordnet, so dass durch die Verdrehung der Trägerscheibe mit dem daran über die Verbindung von Verlängerungsflügeln und Rotorflügeln gekoppelten Verstellkolben relativ zu der ebenfalls von der Haltescheibe getragenen Rotorflügelanordnung für den ersten Grundpulskanal die Phasenlage des Additivpulses relativ zum Grundpuls verstellt werden kann.

Zur Verschiebung von Rotorflügeln und zugeordneten Verlängerungsflügeln gegeneinander ist als Verstellmechanismus vorgesehen, dass in Rotorflügeln und Verlängerungsflügeln jeweils eine Öffnung zur Aufnahme jeweils einer Verstellscheibe ausgebildet ist, wobei die mit einem Flansch außen auf Rotorflügeln bzw. Verlängerungsflügeln aufliegenden und dadurch die Öffnungen abdichtenden Verstellscheiben mittels eines in die jeweilige Öffnung eingreifenden Bundes formschlüssig in der Öffnung festgelegt und darin drehbar sind. Zur Ausbildung des Verstellmechanismus ist dabei vorgesehen, dass die Verstellscheiben in einer zu ihrer Mittenachse exzentrischen Anordnung jeweils eine Bohrung zur Aufnahme einer Feststellschraube aufweisen, von denen die eine Bohrung mit einem Innengewinde versehen ist und die andere Bohrung zur Aufnahme des Schraubenschaftes der Feststellschraube eingerichtet ist.

In der Zeichnung ist ein Ausführungsbeispiel der Erfindung wiedergegeben, welches nachstehend beschrieben ist. Es zeigen:
- Fig. 1: ein variables Pulsventil in einer Perspektivansicht,
- Fig. 2: den Verstellmechanismus für die axiale Verschiebung der Rotorflügel in einer Einzeldarstellung.

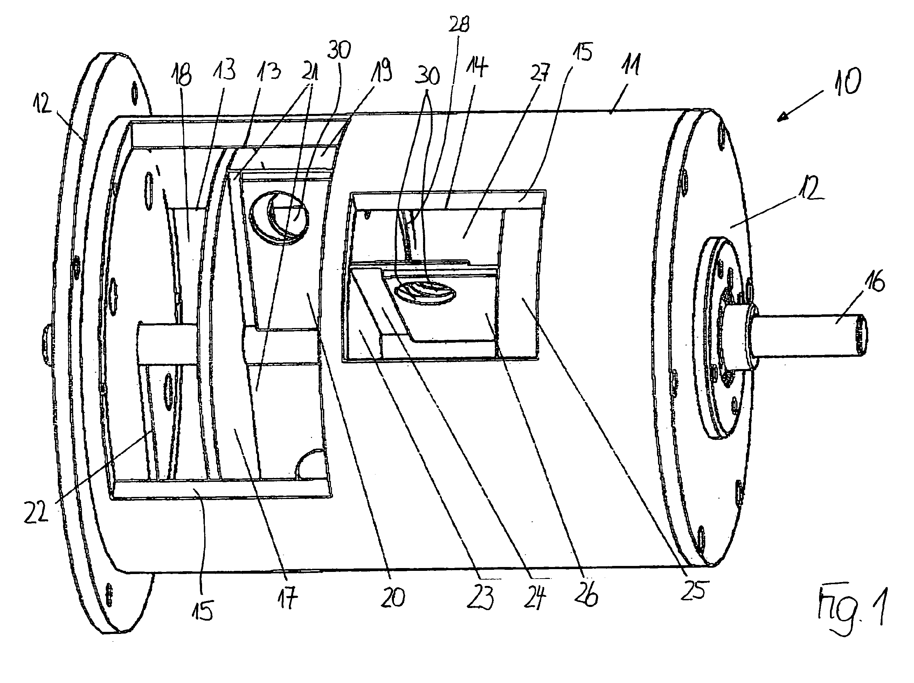

Das in Figur 1 dargestellte Pulsventil 10 weist ein zylindrisches Gehäuse 11 auf, welches an beiden Stirnseiten durch Gehäusedeckel 12 verschlossen ist. In dem zylindrischen Gehäuse 11 sind paarweise einander gegenüberliegende Fensterausschnitte 13 und 14 angeordnet, wobei die jeweiligen Fensterausschnitte von Begrenzungskanten 15 umschlossen sind.

Das zylindrische Gehäuse ist von einer die stirnseitigen Gehäusedeckel 12 durchstoßenden und in diesen gelagerten Rotorwelle 16 durchsetzt. Auf der Rotorwelle 16 ist zunächst dem in Figur 1 linken Gehäusedeckel 12 benachbart eine Verstellscheibe 17 angeordnet, so dass zwischen dem Gehäusedeckel 12 und der Verstellscheibe 17 ein offener erster Kanal 18 gebildet ist, der bei Anströmung des Pulsventils 10 durch einen Fluidstrom einen stationären Durchfluss von Fluid durch das Pulsventil 10 gestattet. Insofern kann der erste Kanal 18 auch als Stationärkanal und der durch diesen geleitete Anteil an Fluid als Stationäranteil bezeichnet werden.

Die mit ihrer Fläche in der Strömungsrichtung zwischen den Fensterausschnitten 13 angeordnete Verstellscheibe 17 unterteilt den durch die gegenüberliegenden Fensterausschnitte 13 vorgegebenen Strömungsweg in den bereits bezeichneten ersten Kanal 18 und einen zweiten Kanal 19.

Diesem zweiten Kanal 19 sind an einer nicht dargestellten, fest mit der Rotorwelle 16 verbundenen Haltescheibe befestigte Rotorflügel 20 zugeordnet. Da die Verstellscheibe 17 bezüglich der Rotorwelle 16 in deren Axialrichtung verstellbar ist, sind an der Verstellscheibe 17 in der Ebene der Rotorflügel 20 Verlängerungsflügel 21 angebracht, die mit den Rotorflügeln 20 um mindestens des maximalen Verstellweg der Verstellscheibe 17 überlappen, so dass Rotorflügel 20 und Verlängerungsflügel 21 gemeinsam eine Rotorflügelanordnung bilden und somit den zweiten Kanal 19 eine von der Rotorwelle 16 angetriebene Rotorflügelanordnung 20, 21 zugeordnet ist. Bei Drehung der Rotorwelle 16 versperren Rotorflügel 20 und Verlängerungsflügel 21 zeitweise die zugeordneten Fensterausschnitte 13, so dass der Fluiddurchgang durch den zweiten Kanal 19 gesperrt ist. In diesem Zeitraum herrscht nur die stationäre Strömung im ersten Stationärkanal 18. Wenn die Außenkante von Rotorflügel 20 und Verlängerungsflügel 21 die zugeordnete Begrenzungskante 15 des Fensterausschnitts 13 überstreicht, entsteht ein sich allmählich öffnender Querschnitt, der einen immer größer werdenden Volumenstrom passieren lässt. Der Strömungsquerschnitt nimmt wieder ab, wenn sich die Außenkante von Rotorflügel 20 und Verlängerungsflügel 21 der in Drehrichtung gegenüberliegenden Fensterausschnitts-Begrenzungskante 15 nähert. Beim Erreichen dieser Kante wird der zweite Kanal 19 wieder geschlossen. Aufgrund dieser Öffnungs- und Schließbewegung pulsiert der durch den zweiten Kanal 19 strömende und als Grundpulsanteil zu bezeichnende Teilstrom des das Pulsventil anströmenden Fluids.

Das Verhältnis von den ersten Kanal 18 durchströmendem Stationäranteil und dem den zweiten Kanal 19 durchströmenden Grundpulsanteil ist dadurch einstellbar, dass die Verstellscheibe 17 innerhalb des Querschnitts der Fensterausschnitte 13 axial verstellbar ist. Zusätzlich kann der Querschnitt des ersten Kanals 18 noch durch die Anbringung von Blockscheiben 22 an dem zugeordneten stirnseitigen Gehäusedeckel 12 verändert werden. Wie nicht weiter dargestellt, kann alternativ vorgesehen sein, an dem zugeordneten stirnseitigen Gehäusedeckel 12 einen verschiebbaren Kolben zur Veränderung des Querschnitts des ersten Kanals 18 vorzusehen.

Soweit erster Kanal 18 und zweiter Kanal 19 durch ein Fensterausschnittspaar 13 gebildet sind, ist zur Ausbildung eines für die Erzeugung eines dritten Teilstroms vorgesehenen dritten Kanals 27 ein gesondertes Paar von Fensterausschnitten 14 vorgesehen. Zur Erzeugung eines durch den dritten Kanal 27 geführten pulsierenden, als Additivpulsanteil zu bezeichnenden Teilstroms sind entsprechend dem zum zweiten Kanal 19 beschriebenen Konstruktionsprinzip eine Trägerscheibe 23 mit daran angeordneten Verlängerungsflügeln 24 sowie ein Verstellkolben 25 mit daran angebrachten Rotorflügeln 26 vorgesehen und über einen die Verbindung von Verlängerungsflügeln 24 und Rotorflügeln 26 bewirkenden Verstellmechanismus miteinander gekoppelt, wobei der Verstellkolben 25 gegenüber der Rotorwelle 16 verdrehbar und axial beweglich ist. Entsprechend überlappen sich Verlängerungsflügel 24 und Rotorflügel 26 um ein entsprechendes Maß, um eine gegenseitige axiale Verstellung von Trägerscheibe 23 und Verstellkolben 25 zueinander zu ermöglichen. Weiterhin ist die Trägerscheibe 23 auf der nicht dargestellten Haltescheibe verdrehbar gehaltert, wobei die Halterung der Trägerscheibe 23 an der Haltescheibe mittels einer Langlochanordnung 28 verwirklicht ist, so dass die Trägerscheibe 23 mit der von dieser getragenen, aus den Verlängerungsflügeln 24 und den Rotorflügeln 26 bestehenden Rotorflügelanordnung gegenüber der Haltescheibe verdrehbar ist. Dadurch ist eine stufenlos einstellbare unterschiedliche Stellung der dem dritten Kanal 27 zugeordneten Rotorflügelanordnung mit Rotorflügeln 26 und Verlängerungsflügeln 24 zu der dem zweiten Kanal 19 zugeordneten Rotorflügelanordnung mit Rotorflügeln 20 und Verlängerungsflügeln 21 ermöglicht. Durch die unterschiedliche und gegeneinander verdrehte Stellung der den beiden Kanälen 19 und 27 zugeordneten Rotorflügelanordnungen kann die Phasenlage des im dritten Kanal 27 erzeugten Additivpulses relativ zum Grundpuls verstellt werden, wobei bei zunehmender Verdrehung gegeneinander im dritten Additivpulskanal allmählich ein eigener kleiner Additivpulsanteil erzeugt wird, der zeitlich dem im zweiten Kanal erzeugten Grundpulsanteil vor- oder nachgelagert sein kann.

Wie aus der Zeichnung ersichtlich weisen die den dritten Additivpulskanal 27 ausbildenden Fensterausschnitte 14 eine in Umfangsrichtung des Gehäuses 11 gerichtete kürzere Erstreckung auf als die dem ersten Stationärkanal 18 und dem zweiten Grundpulskanal 19 zugeordneten Fensterausschnitte 13. Wenn wie dargestellt die Höhe des Additivpulskanals 27 klein ausgebildet ist, wird hierdurch ein zeitlich kurzer und steiler Additivpulsanteil erzeugt, während eine entsprechend große Höhe der Fensterausschnitte 13 für den Grundpulsanteil einen langen und flachen Puls erzeugt. Die Amplituden der jeweiligen Pulse wird wiederum durch die in Richtung der Rotorachse gemessene Breite der beiden Kanäle 19 und 27 bestimmt, die durch ein axiales Verschieben von Verlängerungsflügeln 24 und Rotorflügeln 26 gegeneinander einerseits und die axiale Position der Verstellscheibe 17 andererseits festgelegt sind.

Alle Rotorflügel 20, 26 beziehungsweise Verlängerungsflügel 21, 24 können entweder mit einem sehr kleinen Spalt gegenüber der Innenfläche des Gehäuses laufen oder mit einem großen Spalt, wodurch ein zusätzlicher Anteil an Stationärströmung eingestellt werden kann.

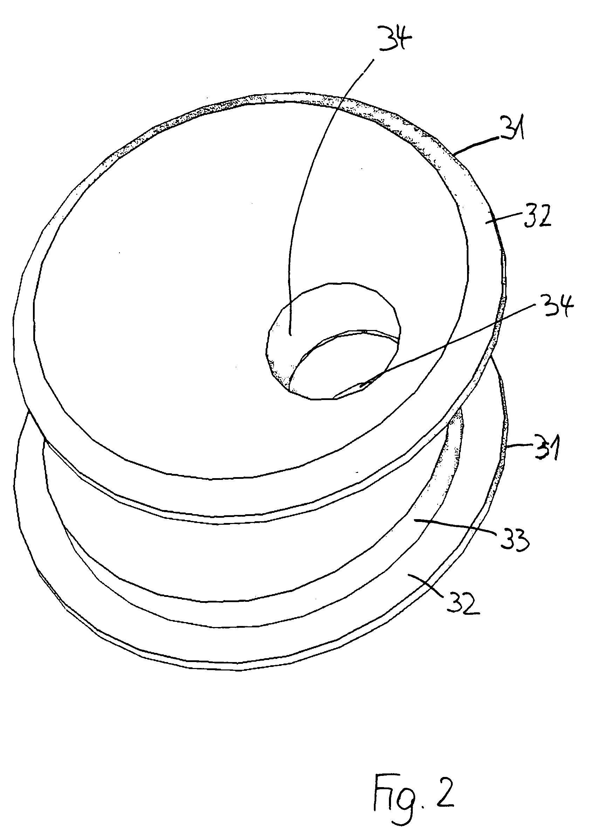

Wie sich aus einer Zusammenschau der Figuren 1 und 2 ergibt, ist der Verstellmechanismus für die axiale Verstellung von Rotorflügeln 20, 26 und zugehörigen Verlängerungsflügeln 21, 24 gegeneinander in einer besonders einfachen und effizienten Weise ausgebildet, die zudem höchsten Anforderungen an die Dichtigkeit der jeweiligen Rotorflügelanordnungen genügt.

Wie sich dazu aus Figur 1 ergibt, sind in den Rotorflügeln 20, 26 beziehungsweise den zugehörigen Verlängerungsflügeln 21, 24 jeweils Öffnungen 30 ausgebildet, die zur Aufnahme der in Figur 2 gesondert dargestellten Verstellscheiben 31 vorgesehen sind. Wie sich dazu aus Figur 2 ergibt, weisen die Verstellscheiben einen äußeren Flansch 32 und einen davon hervorstehenden Bund 33 auf, wobei die Verstellscheiben 31 mit ihrem Bund 33 in die Öffnungen 30 von Rotorflügeln 20, 26 und zugehörigen Verlängerungsflügeln 21, 24 eingesetzt werden. Die Bunde 33 der Verstellscheiben 31 sind dabei passgenau in den Öffnungen 30 gehalten, jedoch in den Öffnungen 30 drehbar.

Weiterhin weisen die beiden Verstellscheiben 31 fluchtende Bohrungen 34 auf, die jedoch exzentrisch zur Mittenachse von Verstellscheiben 31 und damit auch der Öffnungen 30 in den Rotorflügeln 20, 26 beziehungsweise Verlängerungsflügeln 21, 24 angeordnet sind. Die Bohrungen 34 in den Verstellscheiben 31 sind zur Aufnahme einer nicht dargestellten Feststellschraube eingerichtet derart, dass die eine Bohrung 34 in der einen Verstellscheibe 31 mit einem Innengewinde zur Aufnahme des Gewindes der Feststellschraube versehen ist, während die Bohrung 34 in der anderen Verstellscheibe 31 eine solche Abmessung aufweist, dass der Schraubenschaft der Feststellschraube hindurchsteckbar ist. Die Feststellschraube kann dabei beispielsweise auch als Senkkopfschraube ausgebildet sein, an welche die den Schraubenschaft aufnehmende Bohrung 34 der zugeordneten Verstellscheibe 31 angepasst ist, so dass auch die in den Verstellscheiben 31 ausgebildeten Bohrungen 34 durch die Feststellschraube abgedichtet sind. Mittels der Feststellschraube sind einerseits die beiden Verstellscheiben 31 gegeneinander klemmbar, andererseits bei gelöster Feststellschraube aber auch relativ zueinander verdrehbar, wobei die exzentrisch liegende Feststellschraube die Drehachse für die Verdrehung der Verstellscheiben 31 gegeneinander bildet.

Wird beispielsweise die in Figur 2 dargestellte obere Verstellscheibe 31 nach Lösen der nicht weiter dargestellten Feststellschraube um die durch die Mittenachse der Bohrungen 34 definierte Drehachse nach rechts im Uhrzeigersinn verdreht, so hebt sich der der zugeordneten Bohrung 34 gegenüberliegende Umfangsbereich entsprechend an. Da damit auch der unter diesem Umfangsbereich liegende Bereich des zugeordneten Bundes 33 der oberen Verstellscheibe 31 angehoben wird, wird damit gleichzeitig auch die von dem zugeordneten Bund 33 über die den Bund 33 übergreifende Öffnung 30 das zugeordnete Teil der Rotorflügelanordnung, beispielsweise der Rotorflügel 20, angehoben und damit in seiner Längsrichtung verstellt, weil sich der Bund 33 in der zugeordneten Öffnung 30 drehen kann. Würde entsprechend die untere Verstellscheibe 31 entgegen dem Uhrzeigersinn nach links verdreht, so würde deren Bund 33 den von ihr getragenen zugehörigen Verlängerungsflügel 21 in der Bildebene nach unten drücken. Auf diese Weise lassen sich durch eine relative Verdrehung der Verstellscheiben 31 gegeneinander die von den Verstellscheiben 31 getragenen Teile der jeweiligen Rotorflügelanordnung, Rotorflügeln 20 mit zugehörigem Verlängerungsflügel 21 beziehungsweise Rotorflügel 26 mit zugehörigem Verlängerungsflügel 24 verstellen.

## Patentansprüche

1. Pulsventil (10) zur Erzeugung eines großvolumigen pulsierenden Fluidstroms aus einem dem Pulsventil (10) von einer Druckerzeugungsanlage zugeführten Fluid, wobei in dem Gehäuse (11) des Pulsventils (10) wenigstens ein durch einander gegenüberlierende Fensterausschnitte in der Gehäusewand gebildeter Kanal vorgesehen ist und im Inneren des Gehäuses (11) eine drehbare Rotorwelle (16) mit einer darauf angeordneten Rotorflügelanordnung angeordnet ist, die bei Drehung der Rotorwelle (16) im Zusammenwirken mit den Begrenzungskanten der Fensterausschnitte den auf das Pulsventil (10) treffenden Fluidstrom periodisch zum Durchtritt durch das Gehäuse (11) freigibt oder unterbricht, **dadurch gekennzeichnet, dass** in dem Gehäuse (11) des Pulsventils (10) drei Kanäle (18, 19, 27) durch jeweils paarweise einander gegenüberliegende Fensterausschnitte (13, 14) gebildet sind, von denen ein erster Kanal (18) zur Durchleitung eines gleichbleibenden stationären Teilstromes. ein zweiter Kanal (19) zur Erzeugung eines einen Grundpulsanteil bildenden zweiten Teilstromes und ein dritter Kanal (27) zur Erzeugung eines einen Additivpulsteil bildenden dritten Teilstromes des vom Pulsventil (10) erzeugten pulsierenden Fluidstromes eingerichtet ist, wobei auf der Rotorwelle (16) zwei jeweils dem zweiten Kanal (19) und dem dritten Kanal (27) zugeordnete Rotorflügelanordnungen (20, 21; 26, 24) angeordnet sind.

2. Pulsventils nach Anspruch 1, bei welchem die in der Gehäusewand angeordneten Fensterausschnitte (13, 14) in ihrer zum gegenüberliegenden Fensterausschnitt gerichteten Erstreckung einstellbar eingerichtet sind.

3. Pulsventil nach Anspruch 1 oder 2, bei welchem die paarweise gegenüberliegenden Fensterausschnitte (13, 14) in einer symmetrischen Anordnung in der Gehäusewand angeordnet sind.

4. Pulsventil nach Anspruch 1 oder 2, bei welchem die paarweise gegenüberliegenden Fensterausschnitte (13, 14) in einer asymmetrischen Anordnung in der Gehäusewand angeordnet sind.

5. Pulsventil nach einem der Ansprüche 1 bis 4, bei welchem die dem zweiten Kanal (19) und/oder dem dritten Kanal (27) zugeordneten Rotorflügelanordnungen (20, 21; 26, 24) bezüglich der in der Gehäusewand bestehenden Fensterausschnitte (13, 14) verschiebbar und/oder verdrehbar sind.

6. Pulsventil nach einem der Ansprüche 1 bis 5, bei welchem der erste Kanal (18) und der zweite Kanal (19) durch ein gemeinsames Fensterausschnittspaar (13) gebildet sind und zur Unterteilung des dadurch gebildeten Strömungsweges in den ersten (18) und den zweiten (19) Kanal auf der Rotorwelle (16) eine mit ihrer Fläche in der Strömungsrichtung ausgerichtete Verstellscheibe (17) angeordnet ist, an deren einer Seite die Rotorflügelanordnung (20, 21) angeordnet ist.

7. Pulsventil nach Anspruch 6, bei welchem die Verstellscheibe (17) an der Rotorwelle (16) verschiebbar angeordnet ist und an der Verstellscheibe (17) zum Ausgleich von deren Verstellweg gegenüber den bezüglich der Rotorwelle (16) fixierten Rotorflügeln (20) mit den Rotorflügeln überlappende Verlängerungsflügel (21) angebracht sind, wobei Rotorflügel (20) und Verlängerungsflügel (21) mittels eines Verstellmechanismus gegeneinander verschiebbar sind.

8. Pulsventil nach Anspruch 7, bei welchem die Rotorflügel (20) von einer an der Rotorwelle (16) befestigten Haltescheibe getragen sind.

9. Pulsventil nach einem der Ansprüche 6 bis 8, bei welchem der Querschnitt des ersten Stationärkanals (18) durch Anbringen von Blockscheiben (22) an dem der Verstellscheibe (17) gegenüberliegenden Gehäusedeckel (12) des Gehäuses (10) einstellbar ist.

10. Pulsventil nach einem der Ansprüche 6 bis 8, bei welchem der Querschnitt des ersten Stationärkanals (18) durch Anordnung eines verschiebbaren Kolbens an dem der Verstellscheibe (17) gegenüberliegenden Gehäusedeckel (12) des Gehäuses (10) einstellbar ist.

11. Pulsventil nach einem der Ansprüche 1 bis 10, bei welchem dem den dritten Kanal (27) bildenden Fensterausschnittspaar (14) gesonderte Rotorflügelanordnungen zugeordnet sind, die aus an einer bezüglich der Rotorwelle (16) verdrehbar angeordneten Trägerscheibe (23) angebrachten Verlängerungsflügeln (24) und damit überlappend angeordneten, mit einem längs der Rotorwelle (16) verschiebbar und gegenüber der Rotorwelle (16) verdrehbar angeordneten Verstellkolben (25) verbundenen Rotorflügeln (26) bestehen, wobei Verlängerungsflügel (24) und Rotorflügel (26) mittels eines Verstellmechanismus gegeneinander verschiebbar sind.

12. Pulsventil nach Anspruch 11, bei welchem die Trägerscheibe (23) mit den daran befestigten Verlängerungsflügeln (24) an der mit der Rotorwelle (16) fest verbundenen Haltescheibe gegenüber dieser um einen Verdrehweg verdrehbar gehaltert ist derart, dass die Verlängerungsflügel (24) bei der Verdrehung der Trägerscheibe (23) relativ zur Haltescheibe die über den Verstellmechanismus mit den Verlängerungsflügeln (24) gekoppelten Rotorflügel (26) mit Verstellkolben (25) mitnehmen.

13. Pulsventil nach Anspruch 7 oder 11, bei welchem zur Verschiebung von Rotorflügeln (20, 26) und zugeordneten Verlängerungsflügeln (21, 24) gegeneinander als Verstelleinrichtung in Rotorflügeln und Verlängerungsflügeln jeweils eine Öffnung (30) zur Aufnahme jeweils einer Verstellscheibe (31) ausgebildet ist, wobei die mit einem Flansch (32) außen auf Rotorflügeln (20, 26) bzw. Verlängerungsflügeln (21, 24) aufliegenden und dadurch die Öffnungen (30) abdichtenden Verstellscheiben (31) mittels eines in die jeweilige Öffnung (30) eingreifenden Bundes (33) formschlüssig in der Öffnung (30) festgelegt und darin drehbar sind.

14. Pulsventil nach Anspruch 13, bei welchem die Verstellscheiben (31) in einer zu ihrer Mittenachse exzentrischen Anordnung jeweils eine Bohrung (34) zur Aufnahme einer Feststellschraube aufweisen, von denen die eine Bohrung (34) mit einem Innengewinde versehen ist und die andere Bohrung (34) zur Aufnahme des Schraubenschaftes der Feststellschraube eingerichtet ist.

## Claims

1. A pulse valve (10) for generating a high-volume pulsating fluid stream from a fluid fed to the pulse valve (10) by a pressure-generating unit, wherein at least one channel is provided in the housing (11) of the pulse valve (10), which is formed by window cut-outs laying opposite one another in the housing wall and a rotatable rotor (16) having rotor blade assemblies disposed thereon is disposed in the interior of the housing (11), said rotor blade assembly in corporation with the boundary edges of the window cut-outs periodically allowing the fluid stream impinging on the pulse valve (10) to pass through the housing (11) or interrupting the same during rotation of the rotor shaft (16), **characterized in that**, three channels (18, 19, 27) are formed in the housing (11) of the pulse valve (10) by window cut-outs (13, 14) laying opposite one another in pairs wherefrom a first channel (18) is configured for conducting a constant stationary sub-stream, a second channel (19) is configured for generating a second sub-stream forming a basic pulse component and a third channel (27) is configured for generating a sub-stream forming an additional pulse component of the pulsating fluid stream generated by the pulse valve (10), whereby on the rotor shaft (16) two rotor blade assemblies (20, 21; 26, 24) are disposed each being associated with the second channel (19) and the third channel (27).

2. The pulse valve according to claim 1, wherein the window cut-outs (13, 14) disposed in the housing wall are constituted so as to be adjustable in their extension directed towards the opposite-lying window cut-out.

3. The pulse valve according to claim 1 or 2, wherein the window cut-outs (13, 14) lying opposite one another in pairs are disposed in a symmetrical arrangement in the housing wall.

4. The pulse valve according to claim 1 or 2, wherein the window cut-outs (13, 14) lying opposite one another in pairs are disposed in an asymmetrical arrangement in the housing wall.

5. The pulse valve according to any one of claims 1 to 4, wherein the rotor blade assemblies (20, 21; 26, 24) associated with the second channel (19) and/or the third channel (27) are displaceable and/or rotatable with respect to the window cut-outs (13, 14) present in the housing wall.

6. The pulse valve according to any one of claims 1 to 5, wherein the first channel (18) and the second channel (19) are formed by a common pair of window cut-outs (13) and, in order to divide the flow path thus formed into the first (18) and the second (19) channel, an adjustment disc (17) orientated with its face in the flow direction is disposed on the rotor shaft (16), the rotor blade assembly (20, 21) being disposed at one side of said adjustment disc.

7. The pulse valve according to claim 6, wherein the adjustment disc (17) is disposed displaceably on the rotor shaft (16) and extension blades (21) overlapping with the rotor blades are fitted on the adjustment disc (17) to compensate for its adjustment path relative to the rotor blades (20) fixed to the rotor shaft (16), the rotor blades (20) and extension blades (21) being displaceable with respect to one another by means of an adjustment mechanism.

8. The pulse valve according to claim 7, wherein the rotor blades (20) are carried by a support disc fixed to the rotor shaft (16).

9. The pulse valve according to any one of claims 6 to 8, wherein the cross-section of the first stationary channel (18) can be adjusted by the fitting of block discs (22) to the housing cover (12) of the housing (10) lying opposite the adjustment disc (17).

10. The pulse valve according to any one of claims 6 to 8, wherein the cross-section of the first stationary channel (18) can be adjusted by the arrangement of a displaceable piston on the housing cover (12) of the housing (10) lying opposite the adjustment disc (17).

11. The pulse valve according to any one of claims 1 to 10, wherein separate rotor blade assemblies are associated with the pair of window cut-outs (14) forming the third channel (27), said separate rotor blade assemblies comprising extension blades (24) fitted on a carrier disc (23) disposed rotatably relative to the rotor shaft (16) and rotor blades (26) disposed overlapping with said extension blades and connected to an adjustment piston (25) disposed displaceably along the rotor shaft (16) and rotatably with respect to the rotor shaft (16), wherein the extension blades (24) and the rotor blades (26) can be displaced with respect to one another by means of an adjustment mechanism.

12. The pulse valve according to claim 11, wherein the carrier disc (23) with the extension blades (24) fixed thereto is supported on the support disc rigidly connected to the rotor shaft (16) so as to be rotatable with respect to the latter through a rotation path, in such a way that, when the carrier disc (23) is rotated relative to the support disc, the extension blades (24) carry along the rotor blades (26) with the adjustment piston (25), said rotor blades being coupled with the extension blades by means of the adjustment mechanism.

13. The pulse valve according to claim 7 or 11, wherein, for the displacement of the rotor blades (20, 26) and the associated extension blades (21, 24) with respect to one another, an opening (30) for receiving in each case an adjustment disc (31) is formed respectively in the rotor blades and the extension blades as an adjustment device, wherein the adjustment discs (31) lying with a flange (32) externally on the rotor blades (20, 26) or extension blades (21, 24) and thus sealing the openings (30) are fixed in the opening (30) in a form-fit manner by means of a collar (33) engaging in the respective opening (30) and are rotatable therein.

14. The pulse valve according to claim 13, wherein the adjustment discs (31), in an arrangement eccentric to their central axis, each comprise a borehole (34) for receiving a setscrew, whereof one borehole (34) is provided with an inner thread and the other borehole (34) is configured for receiving the screw shank of the setscrew.

## Revendications

1. Soupape à impulsion (10) servant à produire un flux de fluide pulsé de grand volume à partir d'un fluide amené à la soupape à impulsion (10) par une installation de production de pression, sachant qu'au moins un conduit formé par des découpes de fenêtre se faisant face dans la paroi du boîtier est prévu dans le boitier (11) de la soupape à impulsion (10) et qu'un arbre de rotor (16) pouvant tourner doté d'un ensemble de pales de rotor disposé sur ledit arbre de rotor est disposé à l'intérieur du boîtier (11), l'ensemble de pales de rotor libérant, lors de la rotation de l'arbre de rotor (16), en interaction avec les arêtes de délimitation des découpes de fenêtre, le flux de fluide parvenant à la soupape à impulsion (10) par période aux fins du passage à travers le boîtier (11) ou l'interrompant, **caractérisée en ce que** trois conduits (18, 19, 27) sont formés dans le boîtier (11) de la soupape à impulsion (10) par des découpes de fenêtre (13, 14) se faisant face les unes les autres respectivement par paire, parmi lesquels conduits un premier conduit (18) est configuré pour être traversé par un flux partiel stationnaire constant, un deuxième conduit (19) est configuré pour produire un deuxième flux partiel formant une partie de l'impulsion de base et un troisième conduit (27) est configuré pour produire un troisième flux partiel, formant une partie d'impulsion additionnelle, du flux de fluide pulsé produit par la soupape à impulsion (10), sachant que deux ensembles de pales de rotor (20, 21 ; 26, 24) associés respectivement au deuxième conduit (19) et au troisième conduit (27) sont disposés sur l'arbre de rotor (16).

2. Soupape à impulsion selon la revendication 1, dans le cadre de laquelle les découpes de fenêtre (13, 14) disposées dans la paroi de boîtier sont configurées de manière à pouvoir être ajustées dans leur extension orientée en direction de la découpe de fenêtre opposée.

3. Soupape à impulsion selon la revendication 1 ou 2, dans le cadre de laquelle les découpes de fenêtre (13, 14) se faisant face par paire sont disposées dans un ensemble symétrique dans la paroi de boîtier.

4. Soupape à impulsion selon la revendication 1 ou 2, dans le cadre de laquelle les découpes de fenêtre (13, 14) se faisant face par paire sont disposées dans un ensemble asymétrique dans la paroi de boîtier.

5. Soupape à impulsion selon l'une quelconque des revendications 1 à 4, dans le cadre de laquelle les ensembles de pales de rotor (20, 21 ; 26, 24) associés au deuxième conduit (19) et/ou au troisième conduit (27) peuvent être déplacés par coulissement et/ou peuvent être tournés par rapport aux découpes de fenêtre (13, 14) existantes dans la paroi de boîtier.

6. Soupape à impulsion selon l'une quelconque des revendications 1 à 5, dans le cadre de laquelle le premier conduit (18) et le deuxième conduit (19) sont formés par une paire de découpes de fenêtre (13) commune, et en ce qu'un disque de réglage (17) orienté par sa face dans la direction de l'écoulement est disposé dans le premier conduit (18) et dans le deuxième conduit (19) sur l'arbre de rotor (16) afin de séparer le trajet d'écoulement ainsi formé, l'ensemble de pales de rotor (20, 21) étant disposé sur un des côtés dudit disque de réglage.

7. Soupape à impulsion selon la revendication 6, dans le cadre de laquelle le disque de réglage (17) est disposé de manière à pouvoir être déplacé par coulissement au niveau de l'arbre de rotor (16), des pales de prolongement (21) superposées aux pales de rotor sont mises en place au niveau du disque de réglage (17) pour compenser la course de réglage de ce dernier par rapport aux pales de rotor (20) fixées par rapport à l'arbre de rotor (16), sachant que les pales de rotor (20) et les pales de prolongement (21) peuvent être déplacées par coulissement l'une par rapport à l'autre au moyen d'un mécanisme de réglage.

8. Soupape à impulsion selon la revendication 7, dans le cadre de laquelle les pales de rotor (20) sont portées par un disque de retenue fixé au niveau de l'arbre de rotor (16).

9. Soupape à impulsion selon l'une quelconque des revendications 6 à 8, dans le cadre de laquelle la section transversale du premier conduit stationnaire (18) peut être ajustée en mettant en place des disques de bloc (22) au niveau du couvercle (12), faisant face au disque de réglage (17), du boîtier (10).

10. Soupape à impulsion selon l'une quelconque des revendications 6 à 8, dans le cadre de laquelle la section transversale du premier conduit stationnaire (18) peut être ajustée en disposant un piston pouvant être déplacé par coulissement au niveau du couvercle (12), faisant face au disque de réglage (17), du boîtier (10).

11. Soupape à impulsion selon l'une quelconque des revendications 1 à 10, dans le cadre de laquelle des ensembles de pales de rotor isolés sont associés à la paire de découpes de fenêtre (14) formant le troisième conduit (27), lesquels ensemble de pales de rotor sont constitués de pales de prolongement (24) mises en place au niveau d'un disque de support (23) disposé de manière à pouvoir tourner par rapport à l'arbre de rotor (16) et de pales de rotor (26) disposées de manière à chevaucher les pales de prolongement, reliées à un piston de réglage (25) disposé de manière à pouvoir être déplacé par coulissement le long de l'arbre de rotor (16) et disposé de manière à pouvoir tourner par rapport à l'arbre de rotor (16), sachant que les pales de prolongement (24) et les pales de rotor (26) peuvent être déplacées par coulissement les unes par rapport aux autres au moyen d'un mécanisme de réglage.

12. Soupape à impulsion selon la revendication 11, dans le cadre de laquelle le disque de support (23) est maintenu, par les pales de prolongement (24) fixées au niveau du disque de support, au niveau du disque de maintien relié de manière fixe à l'arbre de rotor (16), de manière à pouvoir tourner d'une course de torsion par rapport audit disque de maintien de telle manière que les pales de prolongement (24) entraînent avec le piston de réglage (25) les pales de rotor (26) couplées aux pales de prolongement (24) par l'intermédiaire du mécanisme de réglage lors de la rotation du disque de support (23) par rapport au disque de maintien.

13. Soupape à impulsion selon la revendication 7 ou 11, dans le cadre de laquelle respectivement une ouverture (30) servant à recevoir respectivement un disque de réglage (31) est réalisée comme système de réglage dans des pales de rotor et dans des pales de prolongement pour déplacer par coulissement des pales de rotor (20, 26) et des pales de prolongement (21, 24) associées les unes par rapport aux autres, sachant que les disques de réglage (31) reposant par une bride (32) côté extérieur sur des pales de rotor (20, 26) ou des pales de prolongement (21, 24) et assurant ce faisant l'étanchéité des ouvertures (30) sont fixés dans l'ouverture (30), de manière à pouvoir tourner dans cette dernière, par complémentarité de forme au moyen d'un lien (33) venant en prise avec l'ouverture (30) respective.

14. Soupape à impulsion selon la revendication 13, dans le cadre de laquelle les disques de réglage (31) présentent, dans un ensemble excentrique par rapport à leur axe central, respectivement un alésage (34) servant à recevoir une vis de blocage, un premier alésage (34) étant pourvu d'un filetage intérieur et l'autre alésage (34) étant configuré pour recevoir la tige de vis de la vis de blocage.
